# EUROPEAN PATENT APPLICATION

(11) **EP 4 776 147 A1**
(43) Date of publication of application: **15.07.2026**
(21) Application number: 25224378.7
(22) Date of filing: 17.12.2025
(51) Int. Cl.: G06F 15/78

(54) **NETWORK ON CHIP**

(30) Priority: 09.01.2025 NO 20250019
(71) Applicant: Numascale AS, 0663 Oslo (NO)
(72) Inventor: PERSVOLD, Steffen, 0661 Oslo (NO); PALFER-SOLLIER, Thibaut, 1283 Oslo (NO)
(74) Representative: Bryn Aarflot AS

(57) **Abstract**

A network on chip comprising: a first quadrant, a second quadrant, a third quadrant, and a fourth quadrant; each quadrant comprising a first cluster and a second cluster; and wherein the first cluster of the first quadrant is directly connected to four clusters comprising: the second cluster of the first quadrant, the second cluster of the second quadrant, the first cluster of the fourth quadrant, and the second cluster of the fourth quadrant. The network on chip architecture optimizes connectivity, fault tolerance, and data transmission efficiency by ensuring each cluster is directly connected to four other clusters. This reduces latency, enhances scalability, and improves load balancing. The modular design simplifies integration and expansion, making it suitable for high-performance, reliable, and efficient multi-core systems. This architecture balances wiring complexity, latency, and power consumption, offering significant advantages over traditional topologies.

## Description

### Technical field

The present invention relates to the field of integrated circuit design. Specifically, the present invention pertains to communication architectures within integrated circuits. More specifically, the present invention relates to a network-on-chip (NoC) and NoC architecture.

### Background art

The present invention relates to Network on Chip and optimizing Networks on Chip. Networks on Chip (NoC) offer significant advantages for modern computing systems, but they also come with several challenges.

NoCs require a large number of wires to connect various clusters, which increases the complexity of the chip design. This can lead to higher manufacturing costs and more potential points of failure.

As data packets travel through multiple hops (nodes) to reach their destination, each hop introduces a delay. This cumulative latency can affect the overall performance of the network on chip.

While NoCs are designed to be scalable, managing communication efficiently as the number of cores increases remains a challenge.

The design of NoCs is inherently complex due to the need to balance multiple factors such as latency, power consumption, and fault tolerance.

There are several NoCs on the market, Numascales' UNC5 is one example of Network on Chip (NoC) architecture designed to enhance communication efficiency within a chip.

UNC5 uses packet switching to route data. Data is divided into packets, which are then sent independently through the network.

UNC5 typically employs a torus topology, where each cluster is connected to its neighbouring cluster in a ring-like pattern. This introduces latency and multiple hops between clusters of the UNC5 chip.

Another NoC is Intel's Tera-scale NoC, this chip is designed for high-performance computing, Intel's Tera-scale NoC uses a mesh topology to interconnect multiple clusters.

Other examples of NoCs are: ARM's CoreLink NoC, Tilera's iMesh NoC, NVIDIA's NVLink, Adapteva's Epiphany NoC, Cisco's Silicon One NoC and Kalray's MPPA NoC.

Each of the NoCs represents compromises regarding amount of internal wiring and length of wiring between clusters, the number of I/O's and number of hops between clusters - latency. One aim of the present invention is to provide a NoC which has an optimal combination of amount of wiring, number of intercluster hops and the number of I/Os.

### Summary of the invention

In response to these issues, the present invention provides a network on chip (NoC) architecture that optimizes connectivity, fault tolerance, data transmission efficiency, scalability, and load balancing. The NoC comprises four quadrants, each with two clusters, where each cluster is directly connected to four other clusters. This design reduces latency, improves performance, and simplifies the integration and expansion of multi-core systems.

According to an aspect of the present invention, there is provided a network on chip comprising a first quadrant, a second quadrant, a third quadrant, and a fourth quadrant. Each quadrant comprises a first cluster and a second cluster. The first cluster of the first quadrant is directly connected to four clusters: the second cluster of the first quadrant, the second cluster of the second quadrant, the first cluster of the fourth quadrant, and the second cluster of the fourth quadrant.

According to another aspect of the present invention, there is provided an integrated circuit comprising a network on chip with a plurality of interconnected clusters. Each cluster is directly connected to four clusters across three quadrants of the network chip and indirectly connected to one or more remaining clusters. The integrated circuit also includes a memory unit connected to the network on chip, with the memory unit comprising SRAM configured to store and provide data to the plurality of interconnected clusters.

Further features and advantages will be apparent from the appended patent claims.

### Brief description of the drawings

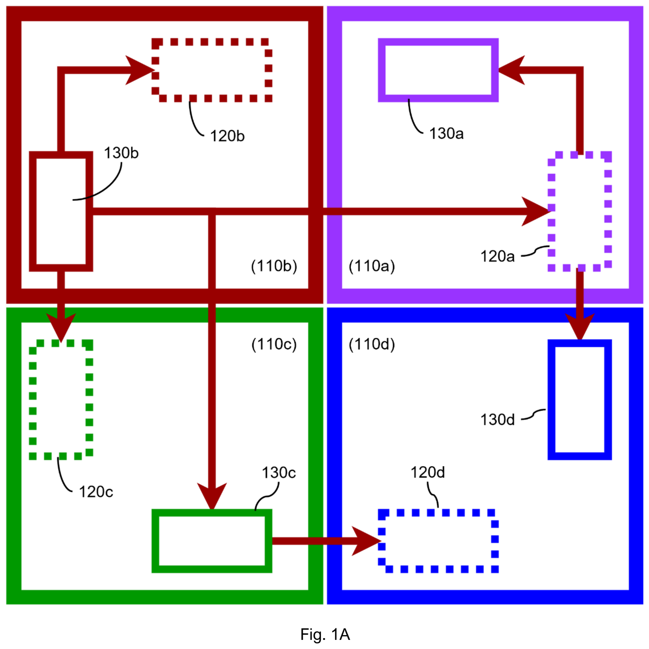

The present invention will be readily understood by referring to the accompanying drawings, in which
Fig. 1A is a schematic diagram illustrating the interconnections between clusters within a network on chip, showing direct connections across four quadrants.
Fig. 1A is a schematic diagram illustrating the interconnections between clusters within a network on chip, showing direct and intermediate connections across four quadrants.
Fig. 2 illustrates a network on chip (100) architecture comprising four quadrants (110a, 110b, 110c, 110d), each with a first cluster (120a, 120b, 120c, 120d) and a second cluster (130a, 130b, 130c, 130d), showing the direct connections between clusters across quadrants.
Fig. 3A is a block diagram illustrating the second quadrant (110b) of a network on chip, showing the direct connections between the first cluster (120b) and the second cluster (130b) within the quadrant.
Fig. 3B is a schematic diagram illustrating the interconnections between clusters within the fourth quadrant (110b) of a network on chip, according to various aspects of the present disclosure.
Fig. 3C illustrates a quadrant (110c) comprising a first cluster (120c) and a second cluster (130c) with various direct connections to other clusters.
Fig. 3D is a schematic diagram illustrating the interconnections between clusters within the fourth quadrant (110d) of a network on chip, according to various aspects of the present disclosure.
Fig. 4 is a block diagram illustrating a port cluster with crossbars for communication between neighbour clusters, in accordance with one or more embodiments described herein.
Fig. 5 is a schematic diagram illustrating the port cluster configuration and interconnections within a network on chip, showing the 3P to P crossbar and connections to remote clusters.
Fig. 6 illustrates a network on chip cluster configuration comprising interconnected clusters with 3P to P crossbars facilitating communication between ports of neighbouring and remote clusters.
Fig. 7 is a schematic diagram illustrating the arbitration mechanism for local and remote cluster communication within a network on chip.
Fig. 8 is a comparative diagram illustrating different network on chip architectures, including UNC5, Optimized 2D Mesh, and Optimized Wagon Wheel, with their respective sets of IOs, levels of arbitration, and placement of routing logic.

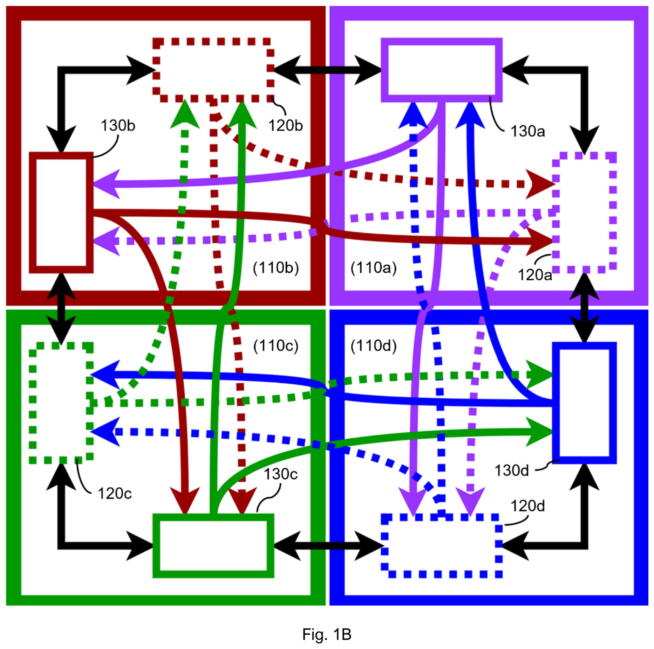

The following table lists the reference numbers of Figs. 1-8. Table 1:

| **Reference Number** | **Component** | **Description** |
|---|---|---|
| 100 | Network on Chip (NoC) | A communication architecture within integrated circuits designed to optimize connectivity, fault tolerance, data transmission efficiency, scalability, and load balancing. |
| 110a | First Quadrant | One of the four quadrants in the NoC, preferably containing two clusters. A quadrant is a section, portion, or partition of the NoC. |
| 110b | Second Quadrant | One of the four quadrants in the NoC, preferably containing two clusters. |
| 110c | Third Quadrant | One of the four quadrants in the NoC, preferably containing two clusters. |
| 110d | Fourth Quadrant | One of the four quadrants in the NoC, preferably containing two clusters. |
| 120a | First Cluster of First Quadrant | A cluster within the first quadrant, directly connected to four other clusters. A cluster |
| | | is a logical or physical grouping of one or more nodes |
| 120b | First Cluster of Second Quadrant | A cluster within the second quadrant, directly connected to four other clusters. |
| 120c | First Cluster of Third Quadrant | A cluster within the third quadrant, directly connected to four other clusters. |
| 120d | First Cluster of Fourth Quadrant | A cluster within the fourth quadrant, directly connected to four other clusters. |
| 130a | Second Cluster of First Quadrant | A cluster within the first quadrant, directly connected to four other clusters. |
| 130b | Second Cluster of Second Quadrant | A cluster within the second quadrant, directly connected to four other clusters. |
| 130c | Second Cluster of Third Quadrant | A cluster within the third quadrant, directly connected to four other clusters. |
| 130d | Second Cluster of Fourth Quadrant | A cluster within the fourth quadrant, directly connected to four other clusters. |
| 141a | Connection between First Cluster of First Quadrant and First Cluster of Fourth Quadrant | A direct connection facilitating communication between these clusters. |
| 141b | Connection between First Cluster of First Quadrant and Second Cluster of First Quadrant | A direct connection facilitating communication between these clusters. |
| 141c | Connection between First Cluster of First Quadrant and Second Cluster of Second Quadrant | A direct connection facilitating communication between these clusters. |
| 141d | Connection between First Cluster of First Quadrant and Second Cluster of Fourth Quadrant | A direct connection facilitating communication between these clusters. |
| 142a | Connection between Second Cluster of First Quadrant and First Cluster of Second Quadrant | A direct connection facilitating communication between these clusters. |
| 142b | Connection between Second Cluster of First Quadrant and First Cluster of First Quadrant | A direct connection facilitating communication between these clusters. |
| 142c | Connection between Second Cluster of First Quadrant and First Cluster of Fourth Quadrant | A direct connection facilitating communication between these clusters. |
| 142d | Connection between Second Cluster of First Quadrant and Second Cluster of Second Quadrant | A direct connection facilitating communication between these clusters. |
| 144c | Branch of Output Link | A branched output link for communication with remote clusters. |
| 3P to P Crossbar | Crossbar Switch | A switching mechanism that routes data between three input ports and one output port, facilitating efficient data transfer. |
| Port #0, Port #1, Port #P-2, Port #P-1 | Ports | Virtual or physical channels associated with the ports, improving performance and traffic management within the NoC. |
| Memory Unit | Memory Unit | A component at the core of the NoC, typically comprising SRAM, providing low-latency and high-bandwidth access to memory. |
| SRAM | Static Random-Access Memory | A type of memory used in the NoC for storing and providing data to interconnected clusters. |
| 3P-to-1 Arbiter | Arbiter | An arbitration mechanism that resolves contention between three primary inputs, ensuring efficient routing of data. |
| Integrated Circuit | Integrated Circuit | A circuit comprising the NoC and a memory unit, designed for efficient data handling and high performance. |

The reference numbers and associated components are not limited to the description of Table 1. All illustrations of the drawings are for the purpose of describing selected versions of the present invention and are not intended to limit the scope of the present invention. As a preliminary matter, it will readily be understood by one having ordinary skill in the relevant art that the present disclosure has broad utility and application. As should be understood, any embodiment optionally incorporates only one or a plurality of the above-disclosed aspects of the disclosure and may further incorporate only one or a plurality of the above-disclosed features. Furthermore, any embodiment discussed and identified as being "preferred" is considered to be part of a best mode contemplated for carrying out the embodiments of the present disclosure.

Other embodiments are also discussed for additional illustrative purposes in providing a full and enabling disclosure. Moreover, many embodiments, such as adaptations, variations, modifications, and equivalent arrangements, will be implicitly disclosed by the embodiments described herein and fall within the scope of the present disclosure. Accordingly, while embodiments are described herein in detail in relation to one or more embodiments, it is to be understood that this disclosure is illustrative and exemplary of the present disclosure, and are made merely for the purposes of providing a full and enabling disclosure. The detailed disclosure herein of one or more embodiments is not intended, nor is to be construed, to limit the scope of patent protection afforded in any claim of a patent issuing here from, which scope is to be defined by the claims and the equivalents thereof. It is not intended that the scope of patent protection be defined by reading into any claim a limitation found herein that does not explicitly appear in the claim itself. Additionally, it is important to note that each term used herein refers to that which an ordinary artisan would understand such term to mean based on the contextual use of such term herein.

The following detailed description refers to the accompanying drawings. Wherever possible, the same reference numbers are used in the drawings and the following description to refer to the same or similar elements. Modifications, adaptations, and other implementations not described herein are possible. For example, substitutions, additions, or modifications may be made to the elements illustrated in the drawings, and the methods described herein are optionally modified by substituting, reordering, or adding stages to the disclosed methods. Accordingly, the following detailed description does not limit the disclosure. Instead, the proper scope of the disclosure is defined by the appended claims.

### Detailed description of the invention

The NoC architecture with interconnected clusters in quadrants described herein offers significant advantages in terms of connectivity, fault tolerance, data transmission efficiency, scalability, localized communication, load balancing, energy efficiency, modularity, bandwidth, memory integration, flexible communication links, input port filtering, and optimized ring and core communication. These benefits make it an efficient and robust improvement for modern multi-core and many-core systems, especially in applications requiring high performance, reliability, and efficient data handling.

The described Network on Chip (NoC) architecture offers enhanced connectivity by ensuring that each cluster is directly connected to four other clusters. This feature increases the number of available communication paths, which can lead to improved data transfer rates and reduced latency. Traditional topologies, such as mesh or ring, often have fewer direct connections, which can result in higher latency and lower data transfer efficiency, or a great number of direct connections, with results in increased complexity, higher power consumption and limited scalability. The direct connections between clusters in this architecture facilitate faster and more efficient communication.

Improved fault tolerance is another significant advantage of this NoC architecture. The multiple direct connections between clusters provide redundancy. If one path fails, data can be rerouted through alternative paths, enhancing the fault tolerance and reliability of the network. This is particularly important in applications where continuous operation is critical, and any single point of failure could lead to significant disruptions.

The architecture supports efficient data transmission by allowing both direct and indirect connections. This flexibility reduces the number of hops required for data to travel between clusters, minimizing latency and improving overall performance. The ability to transmit data directly to adjacent clusters or indirectly through intermediate clusters ensures that data can be routed in the most efficient manner possible. Energy efficiency is enhanced by the architecture's ability to reduce the number of hops and enable more direct communication paths. This can lower the energy consumption associated with data transfers, which is particularly important for power-sensitive applications. By minimizing the distance data needs to travel, the architecture helps to conserve energy and improve the overall efficiency of the network.

Scalability is a key benefit of the described quadrant-based design. New quadrants can be added without significantly disrupting the existing network structure, in X, Y, or Z dimensions. This modular approach makes the NoC suitable for growing computational demands, allowing for easy expansion as more processing power is required. The ability to scale the network efficiently is crucial for applications that need to adapt to increasing workloads over time. Additionally, the modular nature of the design simplifies the integration of different types of processing elements or cores within each quadrant. This modularity is advantageous for heterogeneous computing environments where different quadrants might be optimized for different tasks. The ability to easily integrate and optimize various processing elements enhances the flexibility and adaptability of the NoC.

Localized communication is facilitated by the architecture's design, which allows clusters within the same quadrant to communicate directly. This is beneficial for applications with high intra-quadrant data exchange, as it reduces the load on the overall network and improves efficiency. By enabling direct communication within quadrants, the architecture ensures that data can be transferred quickly and efficiently where it is most needed. Load balancing is another advantage provided by the multiple connections between clusters. Traffic can be dynamically balanced across different paths, preventing congestion and ensuring more efficient use of network resources. This dynamic load balancing capability helps to optimize network performance and avoid bottlenecks that could slow down data transfers.

High bandwidth is achieved through the multiple interconnections between clusters. This increases the available bandwidth for data transfers, which is particularly beneficial for data-intensive applications that require high communication bandwidth. The architecture's design ensures that sufficient bandwidth is available to meet the demands of modern computing tasks.

Optional memory integration is another significant benefit, e.g. with the inclusion of a memory unit at the core of the NoC, particularly with static random-access memory (SRAM). This provides low-latency and high-bandwidth access to memory, significantly enhancing the performance of memory-intensive applications. The central memory unit ensures that data can be accessed quickly and efficiently by any or all clusters. For example, an integrated circuit, e.g. a system-on-chip and/or a microprocessor, comprises NoC 100 and a memory unit.

Flexible communication links are also provided by the architecture, which includes multiple output and input links, with some links branched to transmit identical data to remote clusters. This flexibility in communication links optimizes data distribution and improves overall network efficiency. The ability to transmit identical data to multiple clusters simultaneously can be particularly useful in applications requiring data replication. Input port filtering reduces unnecessary data processing by filtering out data addressed to other clusters. This improves the efficiency of data handling within the network, ensuring that each cluster only processes relevant data. By minimizing the processing of irrelevant data, the architecture enhances the overall performance and efficiency of the NoC.

Optimized ring and core communication is facilitated by the differentiation between ring-side and core-facing communication links. This allows for optimized data routing depending on the target cluster's location, further enhancing the efficiency of data transfers. By distinguishing between different types of communication links, the architecture ensures that data is routed in the most efficient manner possible, improving overall network performance. For example, spacing the ports/IOs around three sides of a cluster, as opposed to just the core-facing side or just the two ring sides, offers several significant benefits that enhance the performance, flexibility, and efficiency of the NoC architecture. This configuration improves load balancing by distributing communication paths more evenly, preventing congestion and ensuring efficient use of network resources. Enhanced connectivity is achieved through increased direct connections, leading to lower latency and higher data transfer rates as data can take shorter, more direct routes. The additional ports/IOs also provide redundant communication paths, enhancing fault tolerance and reliability by allowing data to be rerouted in case of path failures.

Moreover, the three-sided port/lO configuration offers greater flexibility in data routing, enabling clusters to communicate efficiently with both adjacent and non-adjacent clusters. This optimizes data distribution, particularly for applications requiring broadcasting or multicasting, and supports easier scaling of the network as new clusters are added. The configuration also contributes to improved energy efficiency by reducing the number of hops and enabling more direct communication paths, which is crucial for power-sensitive applications. Additionally, it supports heterogeneous computing environments by facilitating the integration of different types of processing elements or cores, and better accommodates complex topologies and communication patterns required by advanced applications. Overall, this design makes the NoC architecture more robust, efficient, and adaptable to a wide range of applications and workloads.

The present invention will now be described in more detail with reference to the accompanying drawings.

The Figures 1A and 1B illustrate eight clusters, two per quadrant, where a quadrant is a partition or segment of the NoC. The topology of the NoC comprises elements of a torus topology, e.g. known from UNC5, and a mesh topology, improving on both as detailed below. Each cluster connects with a neighbouring cluster, one at each side, the remaining ports of the cluster connects via an optimised mesh.

Topology is a trade-off between at least:
a. Amount of wires,
b. Complexity of wiring,
c. Length of wires,
d. Number of I/O's, and
e. Number of clock domain crossings.
Figure 1A and 1B illustrate an optimised topology that balances these elements (a) - (e) for increased efficiency and throughput.

Figure 1A illustrates a network on chip architecture according to one embodiment of the present disclosure. Figure 1A does not show all wires/links, rather it shows all links from cluster 130b of the second quadrant and to all other clusters of the NoC. The figure shows that there will be a maximum of one intermediate hop from the second cluster 130b of the second quadrant to the first cluster of the fourth quadrant 120d, and to the second cluster of the fourth quadrant and to the second cluster of the first quadrant. All other cluster are reached without intermediate hops. The topology is restricted to eight clusters. Note that for symmetry reasons the same number of hops will apply to all clusters of the NoC. It can be seen that the second cluster of the second quadrant is directly linked with four clusters and one intermediate hop is necessary to reach the three remaining clusters. Routing topology is a trade-off between latency, number of I/O's and the wiring complexity. It appears from the figure that data are sent from the second cluster of the second quadrant and directly to remote clusters, from the remote cluster the data can be forwarded to neighbouring cluster, this applies to all links between neighbouring clusters.

Each quadrant has its own clock domain which means one will have clock domain crossing between quadrants, thus it is advantageous to cross as few borders as possible for this reason as well.

The network on chip 100 of Figure 1A comprises a first quadrant 110a (purple), a second quadrant 110b (red), a third quadrant 110c (green), and a fourth quadrant 110d (blue). Each quadrant (110a, 110b, 110c, 110d) comprises a first cluster (120a, 120b, 120c, 120d), e.g. as shown with dashed outlines, and a second cluster (130a, 130b, 130c, 130d), e.g. as shown with solid outlines. More clusters, e.g. three within a quadrant, or fewer clusters, e.g. one cluster within a quadrant, is optional, and two per quadrant as depicted is preferable for at least the reasoning disclosed herein. The configuration of the quadrants is not limited to the depicted configuration, e.g. the fourth quadrant 110d is optionally directly connected to the second quadrant 110b.

A first cluster of a quadrant is directly connected to four clusters of at least three quadrants. E.g., there is no intermediate cluster. Optionally, additional components are connected between the first cluster and the directly connected clusters, e.g. SRAM. The remaining three clusters are indirectly connected, e.g. connected via another cluster. This results in a configuration enabling four single hop and three intermediate hop communication from the cluster. For example, the second cluster 130b (solid red outline) is directly connected to the first cluster 120a (dashed purple outline), the first cluster 120b (dashed red outline), the first cluster 120c (dashed green outline), and the second cluster 130c (solid green outline). The second cluster 130b is then connected to the second cluster 130a (solid purple outline) via a directly connected cluster, e.g. the first cluster 120a. The clusters in the remaining quadrant, first cluster 120d (dashed blue outline) and second cluster 130d (solid blue outline), also receive communication from the second cluster 130b via an intermediate cluster, e.g. the second cluster 130c and the first cluster 120a.

Optionally, any cluster is arranged in the same or similar configuration. For example, the first cluster 120a of the first quadrant 110a is directedly connected to four clusters comprising: the second cluster 130a of the first quadrant 110a, the second cluster 120b of the second quadrant 110b, the first cluster 120d of the fourth quadrant 110d, and the second cluster 130d of the fourth quadrant 110d. Preferably, each quadrant is arranged in the same or similar configuration for each first cluster. Accordingly, a cluster of each quadrant is optionally directly connected to clusters of at least two additional quadrants. Additionally, or alternatively, the second cluster for each quadrant is directly connected symmetrically, e.g. as shown in Figure 1B.

Optionally, the communication is bidirectional. Preferable, communication, e.g. transmission of data, is performed in the direction depicted by the arrows between clusters.

Preferably, a cluster, e.g. first cluster 120a, is a logical or physical grouping of one or more nodes, e.g., processing elements, memory blocks, or other components, within the NoC 100. These nodes are typically connected locally, e.g. within the cluster, and communicate with other clusters via the broader NoC infrastructure described. The nodes within a cluster optionally comprise general-purpose processing units, e.g., CPUs, specialized accelerators, e.g., for Al, graphics, or signal processing, memory modules, e.g., SRAM or DRAM banks, peripheral controllers, or other standard units. Clusters are preferably configured to optimize communication by leveraging a local interconnect, such as a bus, crossbar, or small mesh topology, to facilitate low-latency and high-bandwidth communication among the nodes within the cluster. This localized communication reduces congestion in the broader NoC 100 and minimizes the power and latency penalties associated with long-distance inter-node communication. Clusters typically share common resources, such as cache memory, memory controllers, or specialized hardware units (e.g., encryption engines or neural network accelerators), allowing the system to balance resource utilization and reduce redundancy. For example, a cluster of processing cores might share a Level 2 (L2) cache or a local scratchpad memory, enabling high-speed data sharing and collaborative task execution within the group. Clusters are beneficial in systems requiring high scalability, as they allow the NoC to maintain modularity and efficiency while scaling to accommodate more nodes or functionalities. In multicore processors, for example, clusters are often used to group a fixed number of cores, e.g., four or eight CPUs, each with its own private cache, while sharing a larger L2 or L3 cache within the cluster. These clusters then communicate with other clusters across the NoC for tasks that require broader system coordination. Al accelerators provide another example, where clusters consist of matrix multiplication units, vector processors, and local SRAM that collectively perform dense computation tasks. In GPU architectures, clusters of shader cores, often called Compute Units (CUs), handle parallel graphics rendering or Al inference tasks while sharing common caches or local memory pools. Another example can be found in systems like system-on-chip (SoC) designs for smartphones, where clusters combine heterogeneous processors, grouping power-efficient and high-performance cores into separate clusters, each optimized for different workloads. These configurations enable tailored performance and energy efficiency, with the NoC coordinating data movement between clusters as necessary. However, the skilled person will understand that any node or computational element can be used in place of a cluster.

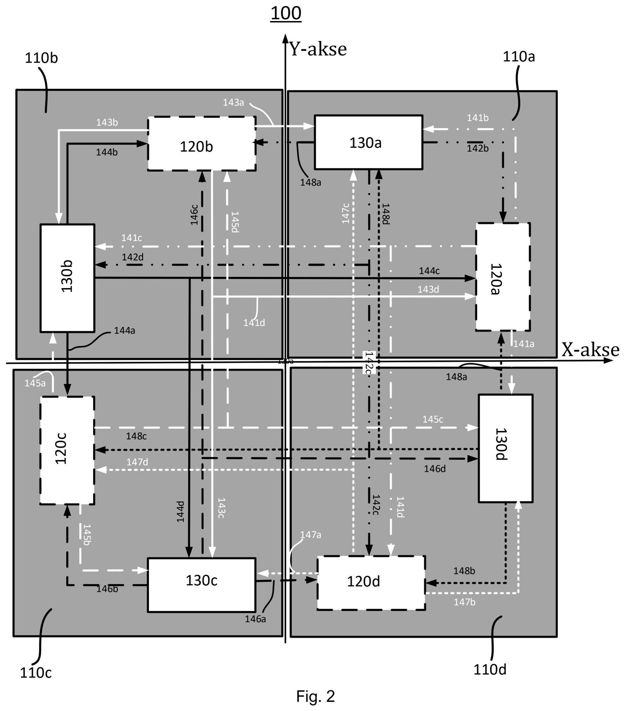

Figure 2 illustrates the direct connections between clusters, e.g. the clusters of Figure 1. In Figure 2, the NoC 100 comprises a first quadrant 110a, a second quadrant 110b, a third quadrant 110c, and a fourth quadrant 110d. Each quadrant, e.g. first quadrant 110a, comprises a first cluster, e.g. 120a, and a second cluster e.g. 130a. The first cluster 120a is directedly connected to four clusters, including the second cluster 130a of the first quadrant 110a, the second cluster 120b of the second quadrant 110b, the first cluster 120d of the fourth quadrant 110d, and the second cluster 130d of the fourth quadrant 110d. The first cluster 120 is preferably indirectly connected to the remaining three clusters, balancing scalability, efficiency, performance and reduced latency. Preferably, the first cluster 120a and the second cluster 130a share a common node architecture and are optionally interchangeable.

The connections of first cluster 120a prevent more than two Clock domain crossings (CDCs) and the majority of clusters in the NoC are connected by a single hop. Reducing the crossings from one quadrant with one clock domain to another quadrant with a different clock domain in the NoC 100 architecture is highly beneficial for several technical reasons. CDCs introduce significant complexity in the design and operation of digital systems due to the need to manage timing discrepancies between different clock signals. When data transfers occur between quadrants operating under different clock domains, synchronization mechanisms such as FIFOs (First-In-First-Out buffers) or dual-clock flip-flops must be employed to ensure data integrity and prevent metastability. These synchronization mechanisms add latency and can become performance bottlenecks, reducing the overall efficiency of the NoC. Additionally, managing multiple clock domains increases the design complexity, requiring careful timing analysis and verification to ensure reliable operation. This complexity can lead to longer design cycles and higher development costs. By reducing the number of clock domain crossings, the NoC can achieve lower latency, higher data transfer rates, and improved overall performance. It also simplifies the design and verification processes, making the system more robust and easier to scale. Furthermore, minimizing CDCs reduces power consumption, as fewer synchronization circuits are needed, which is particularly important for power-sensitive applications. Overall, reducing clock domain crossings enhances the reliability, performance, and efficiency of the NoC 100, making it a critical consideration in the design of high-performance, scalable chip architectures.

Directly linking to the majority of clusters in the NoC 100 architecture, while leaving a subset of clusters accessible through an additional hop, offers a balanced approach that optimizes both performance and resource utilization. This design reduces the complexity and overhead associated with fully connecting every cluster, which can lead to excessive wiring, increased power consumption, and higher design complexity. By limiting direct connections to the majority of clusters, the architecture can achieve lower latency for most data transfers while still maintaining manageable levels of interconnect complexity. This selective connectivity ensures that critical communication paths are optimized for performance, while less critical paths can tolerate the slight increase in latency introduced by an additional hop.

Compared to a ring topology, where some clusters are several hops away, this approach significantly reduces the worst-case communication latency. In a ring topology, data must traverse multiple intermediate nodes to reach distant clusters, leading to higher latency and potential bottlenecks. The selective direct linking strategy of NoC 100 ensures that most clusters can communicate with minimal latency, improving overall network efficiency and performance. Additionally, this approach enhances fault tolerance and load balancing by providing multiple paths for data to travel, reducing the likelihood of congestion and ensuring more even distribution of network traffic. The reduced number of direct connections also simplifies the routing algorithms and physical design, making the network easier to implement and scale. Overall, directly linking to the majority of clusters while allowing some to be an additional hop away strikes an optimal balance between performance, complexity, and resource efficiency, offering significant advantages over both fully connected and ring topologies.

Optionally, adjacent connections are terminal, meaning that the connections between clusters do not form a continuous loop or ring. Instead, each cluster has a finite number of direct connections to its neighbouring clusters, and these connections do not wrap around to form a closed loop. This design choice prevents the NoC from operating as a ring topology, resulting in several distinct benefits. One of the primary advantages of avoiding a ring topology is the reduction in communication latency, as described above. By using terminal connections, the NoC can ensure that data paths are shorter and more direct, reducing the number of hops required for data to travel between clusters. This leads to lower latency and improved overall network performance. Another benefit of terminal connections is enhanced fault tolerance. In a ring topology, a single point of failure can disrupt the entire communication loop, potentially isolating clusters and preventing data transfer. Terminal connections, on the other hand, provide multiple redundant paths for data to travel. If one connection fails, data can be rerouted through alternative paths, ensuring continuous operation and improving the reliability of the network.

Terminal connections also simplify the design and implementation of the NoC 100. Ring topologies require complex routing algorithms to manage data flow and prevent congestion, as well as mechanisms to handle potential deadlocks and livelocks. Terminal connections reduce the complexity of routing algorithms, as data paths are more straightforward and predictable. This simplification can lead to lower design and verification costs, as well as easier scalability and maintenance. Furthermore, terminal connections can lead to more efficient use of network resources. In a ring topology, all data packets share the same communication paths, which can lead to contention and underutilization of available bandwidth. Terminal connections allow for more flexible and dynamic routing, enabling better load balancing and more efficient use of network resources. This can result in higher throughput and better overall performance.

Preferably, the second cluster 130a is directly connected to four clusters in a symmetrical configuration to the connections of the first cluster 120a. For example, the second cluster is connected to the first cluster 120a of the first quadrant 110a, the first cluster 120b of the second quadrant 110b, the second cluster 130b of the second quadrant 110b, and the first cluster 120d of the fourth quadrant 110d.

Having two clusters per quadrant with the same or interchangeable internal architecture and symmetrical connections to other clusters offers numerous technical advantages. This design simplifies the overall architecture, making the design and manufacturing processes more efficient. Engineers can focus on developing a single cluster architecture that can be replicated across the network, reducing the complexity and time required for design and verification. This uniformity also leads to economies of scale in manufacturing, as the same design can be used to produce multiple clusters, potentially lowering production costs. The modular approach of having two clusters per quadrant allows for easy scalability, enabling the network to grow seamlessly to meet increasing computational demands. This modularity ensures that additional quadrants can be integrated without significant changes to the existing architecture, facilitating the expansion of the system.

Symmetrical connections between clusters ensure balanced load distribution, preventing congestion and bottlenecks, and leading to more efficient use of network resources. This balanced load distribution is crucial for maintaining high performance under varying workloads. The redundancy provided by symmetrical connections enhances fault tolerance and reliability, as data can be rerouted through alternative paths in case of a path failure. Interchangeable internal architectures offer flexibility in functionality and resource allocation, allowing clusters to take over tasks from overloaded or failed clusters, ensuring uninterrupted operation. This interchangeability also enables dynamic reconfiguration of the network to optimize performance based on current workloads. Uniform cluster architecture simplifies maintenance and upgrades, as standardized procedures can be developed for diagnosing and repairing issues, reducing maintenance time and effort. Upgrades can be uniformly applied across all clusters, ensuring consistent improvements. Symmetrical connections optimize communication efficiency by minimizing the number of hops required for data to travel between points in the network, reducing latency and improving data transfer rates. This is particularly important for real-time processing and low-latency communication applications. The efficient development approach, resulting from the use of a single, standardized cluster design, reduces the need for multiple design iterations and extensive testing, reducing time and resources, and increasing reliability.

While it is technically feasible to design a NoC architecture with one cluster per quadrant, this approach effectively results in a fully connected mesh-type architecture. Such a design inherently comes with several drawbacks, including increased complexity in routing algorithms, higher power consumption due to the extensive interconnections, and potential scalability issues as the network grows. On the other hand, architectures with three or four clusters per quadrant are also possible, but they introduce their own set of challenges. These configurations can lead to inefficiencies in data routing and communication, as the increased number of clusters per quadrant complicates the network topology. This added complexity can result in higher latency and reduced overall performance. Additionally, managing load balancing becomes more difficult with three or four clusters per quadrant, as the distribution of workloads across a more complex network can lead to congestion and bottlenecks. The increased number of clusters also raises the design and implementation complexity, making the network harder to optimize and maintain. In contrast, the described architecture with two clusters per quadrant strikes an optimal balance, offering simplified design and manufacturing, efficient load balancing, and enhanced scalability, while avoiding the inefficiencies and complexities associated with having either fewer or more clusters per quadrant.

Quadrants are sections of the NoC, and alternative numbers to four are optional, e.g. three quadrants are also possible. One of the primary benefits of a three-quadrant design is the potential for improved resource allocation and specialization. Additionally, a three-quadrant design can simplify the routing algorithms and reduce the complexity of inter-cluster communication, as the number of direct connections and potential communication paths is inherently limited compared to a four-quadrant design. This can lead to lower latency and reduced power consumption, as data may need to traverse fewer hops to reach its destination. However, with only three quadrants, the network may struggle to evenly distribute workloads, leading to potential bottlenecks and congestion in certain areas of the network. This can negatively impact overall performance and efficiency, particularly in scenarios where one quadrant becomes a hotspot for data traffic. Furthermore, the reduced number of quadrants limits the scalability of the network. Adding new processing elements or expanding the network to accommodate increased computational demands becomes more challenging, as the three-quadrant design inherently offers fewer expansion options compared to a four-quadrant or more complex design. Additionally, the asymmetry introduced by a three-quadrant layout can complicate the design and implementation of routing protocols, potentially leading to increased design complexity and longer development times. Overall, while a three-quadrant NoC architecture can offer benefits in terms of resource specialization and simplified routing, it also presents challenges related to load balancing, scalability, and design complexity that must be carefully managed.

Alternatively, a number larger than four can be used, e.g. six or sixteen quadrants. Implementing the NoC architecture with six (e.g. hexagonal) or sixteen (e.g. four by four) quadrants offers distinct benefits and drawbacks that must be carefully evaluated. A six-quadrant hexagonal design provides a highly scalable and efficient layout, facilitating straightforward expansion and interconnection. The hexagonal structure allows for uniform distribution of communication paths, which can enhance load balancing and reduce congestion. This design also supports efficient routing algorithms, as each quadrant has multiple direct neighbours, minimizing the number of hops required for data to travel across the network. The increased number of quadrants in a hexagonal layout can lead to improved fault tolerance, as multiple redundant paths are available, ensuring reliable data transmission even in the event of a failure in one part of the network. Additionally, the hexagonal configuration can optimize spatial utilization on the chip, potentially leading to better performance and energy efficiency. However, for the hexagonal layout, the primary drawback is the increased complexity in designing and implementing the routing algorithms and interconnects. The non-rectangular structure may require more sophisticated routing protocols to manage the multiple direct connections and ensure efficient data transmission. Additionally, the hexagonal design may complicate the physical layout on the chip, potentially leading to increased design and manufacturing costs.

On the other hand, a sixteen-quadrant (four by four) design offers even greater scalability and parallelism, making it suitable for highly parallel and data-intensive applications. The four by four grid structure allows for a high degree of modularity, enabling easy integration of diverse processing elements or cores tailored to specific tasks. This can significantly enhance the performance of heterogeneous computing environments. The increased number of quadrants in a sixteen-quadrant design also provides ample opportunities for load balancing, as workloads can be distributed more evenly across the network. Furthermore, the grid layout simplifies the implementation of routing protocols, as the regular structure allows for predictable and efficient data paths.

The described architecture with four quadrants strikes an optimal balance, offering simplified design and manufacturing, efficient load balancing, and enhanced scalability. The four-quadrant design provides a regular and symmetrical structure that simplifies the implementation of routing protocols and ensures efficient communication paths. This configuration allows for effective load distribution, preventing congestion and bottlenecks, and ensuring high performance under varying workloads. The modular nature of the four-quadrant design facilitates easy scalability, enabling the network to grow seamlessly to meet increasing computational demands. Overall, the four-quadrant architecture avoids the inefficiencies and complexities associated with having either fewer or more quadrants, making it an optimal choice for modern multi-core and many-core systems.

A total of 8 clusters across four quadrants as shown in Figure 1B represents an optimal balance of performance, scalability, and efficiency for NoC 100. This configuration leverages the benefits of both modularity and symmetry, ensuring that each quadrant can be designed, manufactured, and scaled uniformly. The two clusters per quadrant design simplifies the internal architecture, making it easier to manage and maintain while providing sufficient redundancy and fault tolerance through symmetrical connections. This setup enhances load balancing by evenly distributing workloads across the network, preventing congestion and ensuring efficient use of resources. The regular structure of four quadrants facilitates straightforward implementation of routing protocols, minimizing latency and optimizing data transfer rates. Additionally, the 8-cluster configuration offers ample parallelism to handle diverse and intensive computational tasks, making it highly suitable for modern multi-core and many-core systems. By avoiding the complexities and inefficiencies associated with having either fewer or more clusters, the four quadrants with two clusters each design stands out as the best choice for achieving high performance, reliability, and scalability in NoC architectures.

A cluster is a logical or physical grouping of one or more nodes (e.g. processing elements, memory blocks, or other components) within the NoC. These nodes are typically connected locally (within the cluster) and communicate with other clusters via the broader NoC infrastructure described. The one or more nodes optionally comprise any of general-purpose processing units (e.g., CPUs), specialised accelerators (e.g., for Al, graphics, or signal processing), memory modules (e.g., SRAM or DRAM banks), peripheral controllers, or other standard units. Clusters are designed to optimise communication by leveraging a local interconnect, e.g. a bus, crossbar, or small mesh topology, to facilitate low-latency and high-bandwidth communication among the nodes within the cluster. This localised communication reduces congestion in the broader NoC and minimises the power and latency penalties associated with long-distance inter-node communication. Clusters typically share common resources, such as cache memory, memory controllers, or specialised hardware units (e.g., encryption engines or neural network accelerators), allowing the system to balance resource utilisation and reduce redundancy. For example, a cluster of processing cores might share a Level 2 (L2) cache or a local scratchpad memory, enabling high-speed data sharing and collaborative task execution within the group.

Clusters are beneficial in systems requiring high scalability, as they allow the NoC 100 to maintain modularity and efficiency while scaling to accommodate more nodes or functionalities. In multicore processors, for example, clusters are often used to group a fixed number of cores (e.g., four or eight CPUs), each with its own private cache, while sharing a larger L2 or L3 cache within the cluster. These clusters then communicate with other clusters across the NoC for tasks that require broader system coordination. Al accelerators provide another example, where clusters consist of matrix multiplication units, vector processors, and local SRAM that collectively perform dense computation tasks. In GPU architectures, clusters of shader cores, often called Compute Units (CUs), handle parallel graphics rendering or Al inference tasks while sharing common caches or local memory pools. Another example can be found in systems like system-on-chip (SoC) designs for smartphones, where clusters combine heterogeneous processors, grouping power-efficient and high-performance cores into separate clusters, each optimised for different workloads. These configurations enable tailored performance and energy efficiency, with the NoC 100 coordinating data movement between clusters as necessary. However, the skilled person will understand that any node or computational element can be used in place of a cluster.

Preferably, each quadrant is connected as described in relation to the first cluster 120a and the second cluster 130a of the first quadrant 110a, as shown in Figure 2. Figure 2 illustrates the direct connections between each cluster.

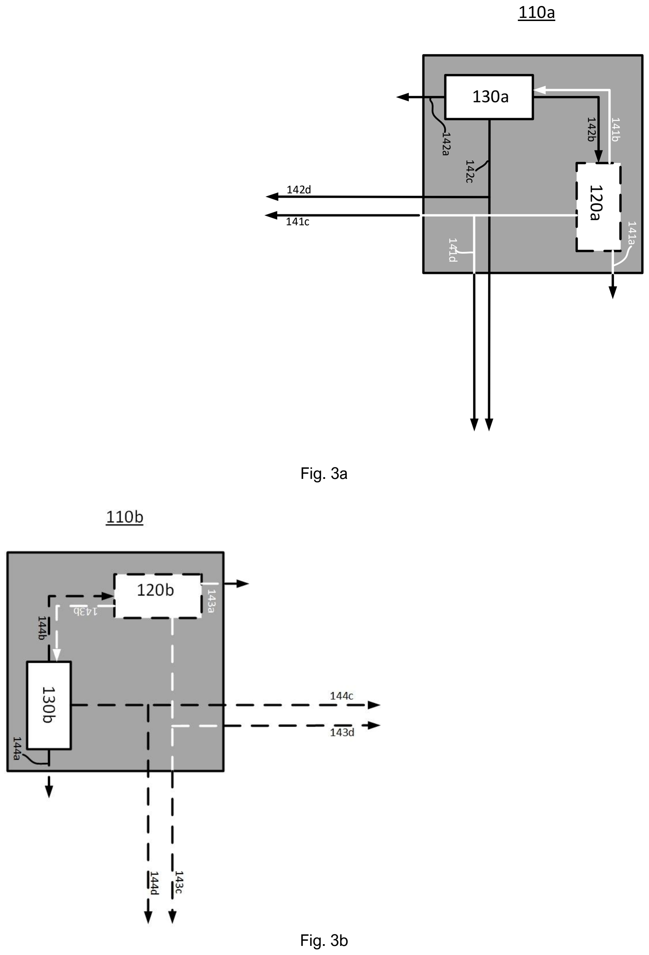

For example, as shown in Figure 3A for the first quadrant 110a, the first cluster 120a of the quadrant 110a is directly connected to: the second cluster 130a of the quadrant 110a (e.g. via connection 141b), the first cluster 120d and the second cluster 130d of an adjacent quadrant in the first circumferential direction 110d (e.g. via connections 141a and 141d respectively), and the second cluster 130b in an adjacent quadrant in the second circumferential direction 110b (e.g. via connection 141c). Connections 141d 141c and optionally branches of output 144c. The second cluster 130a of the quadrant 110a is directly connected to: the first cluster 120a of the quadrant 110a (e.g. via connection 142b), the first cluster 120d of the adjacent quadrant in the first circumferential direction 110d (e.g. via connection 142c), and the first cluster 120b and the second cluster 130b in the adjacent quadrant in the second circumferential direction 110b (e.g. via connection 142a and 142d, optionally a branch of 142c, respectively).

As shown in Figure 3B for the second quadrant 110b, the first cluster 120b of the quadrant 110b is directly connected to: the second cluster 130b of the quadrant 110b, the first cluster 120a and the second cluster 130a of an adjacent quadrant in the first circumferential direction 110a, and the second cluster 130c in an adjacent quadrant in the second circumferential direction 110c. The second cluster 130b of the quadrant 110b is directly connected to: the first cluster 120b of the quadrant 110b, the first cluster 120a of the adjacent quadrant in the first circumferential direction 110a, and the first cluster 120c and the second cluster 130c in the adjacent quadrant in the second circumferential direction 110c.

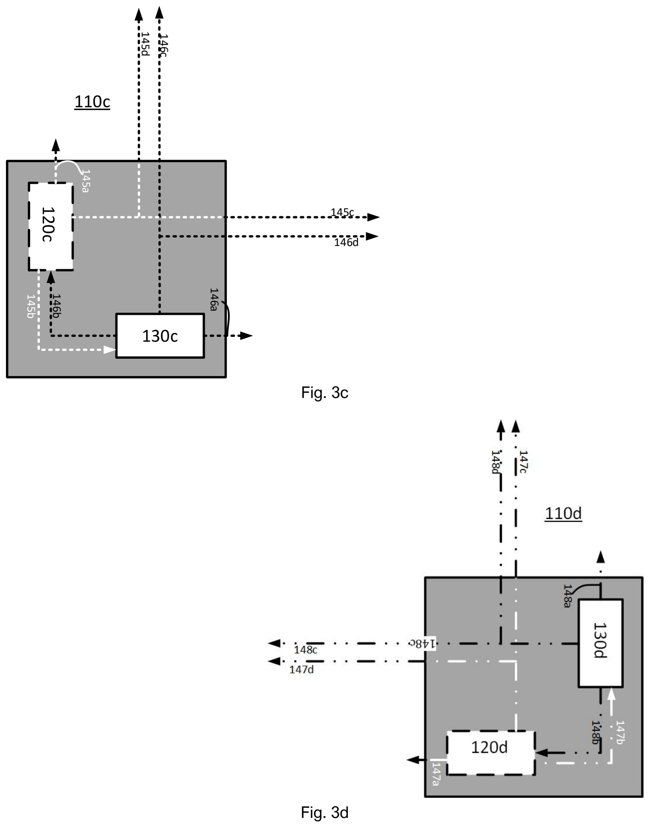

As shown in Figure 3C for the third quadrant 110c, the first cluster 120c of the quadrant 110c is directly connected to: the second cluster 130c of the quadrant 110c, the first cluster 120b and the second cluster 130b of an adjacent quadrant in the first circumferential direction 110b, and the second cluster 130d in an adjacent quadrant in the second circumferential direction 110d. The second cluster 130c of the quadrant 110c is directly connected to: the first cluster 120c of the quadrant 110c, the first cluster 120b of the adjacent quadrant in the first circumferential direction 110b, and the first cluster 120d and the second cluster 130d in the adjacent quadrant in the second circumferential direction 110d.

As shown in Figure 3D for the fourth quadrant 110d, the first cluster 120d of the quadrant 110d is directly connected to: the second cluster 130d of the quadrant 110d, the first cluster 120c and the second cluster 130c of an adjacent quadrant in the first circumferential direction 110c, and the second cluster 130a in an adjacent quadrant in the second circumferential direction 110a. the second cluster 130d of the quadrant 110d is directly connected to: the first cluster 120d of the quadrant 110d, the first cluster 120c of the adjacent quadrant in the first circumferential direction 110c, and the first cluster 120a and the second cluster 130a in the adjacent quadrant in the second circumferential direction 110a.

In other words, the first cluster 120a and the second cluster 130a are symmetrically interchangeable. The first circumferential direction is clockwise or anticlockwise, and the second circumferential direction is opposing the first circumferential direction, e.g. anticlockwise or clockwise.

Preferably, for the first quadrant 110a, the first cluster 120a of the quadrant 110a is indirectly connected to three clusters comprising: the first cluster 120c of a further quadrant in the second circumferential direction 110c via the second cluster 130b in the adjacent quadrant in the second circumferential direction 110b; the second cluster 130c of a further quadrant in the first circumferential direction 110c via the first cluster 120d of the adjacent quadrant in the first circumferential direction 110d; and the first cluster 120b in an adjacent quadrant in the second circumferential direction 110b. For the second quadrant 110b, the first cluster 120b of the quadrant 110b is indirectly connected to three clusters comprising: the first cluster 120d of a further quadrant in the second circumferential direction 110d via the second cluster 130c in the adjacent quadrant in the second circumferential direction 110c; the second cluster 130d of a further quadrant in the first circumferential direction 110d via the first cluster 120a of the adjacent quadrant in the first circumferential direction 110a; and the first cluster 120c in an adjacent quadrant in the second circumferential direction 110c. For the third quadrant 110c, the first cluster 120c of the quadrant 110c is indirectly connected to three clusters comprising: the first cluster 120a of a further quadrant in the second circumferential direction 110a via the second cluster 130d in the adjacent quadrant in the second circumferential direction 110d; the second cluster 130a of a further quadrant in the first circumferential direction 110a via the first cluster 120b of the adjacent quadrant in the first circumferential direction 110b; and the first cluster 120d in an adjacent quadrant in the second circumferential direction 110d. For the fourth quadrant 110d, the first cluster 120d of the quadrant 110d is indirectly connected to three clusters comprising: the first cluster 120b of a further quadrant in the second circumferential direction 110b via the second cluster 130a in the adjacent quadrant in the second circumferential direction 110a; the second cluster 130b of a further quadrant in the first circumferential direction 110b via the first cluster 120c of the adjacent quadrant in the first circumferential direction 110c; and the first cluster 120a in an adjacent quadrant in the second circumferential direction 110a.

Beneficially, having direct and indirect connections that are the same or similar for each quadrant results in uniformity and symmetry. This uniform connectivity ensures that each quadrant has an equal and predictable communication structure, which simplifies the design and implementation of routing algorithms. By maintaining consistent direct and indirect connections, the network can achieve balanced load distribution, preventing congestion and ensuring efficient use of resources. This uniformity also enhances fault tolerance, as the redundancy provided by symmetrical connections allows for reliable rerouting of data in case of path failures. Additionally, the predictable connectivity pattern facilitates easier scalability, as new quadrants can be added without disrupting the existing network structure. Overall, the consistent direct and indirect connections across quadrants lead to improved performance, reliability, and scalability of the NoC, making it more robust and efficient for handling diverse computational workloads.

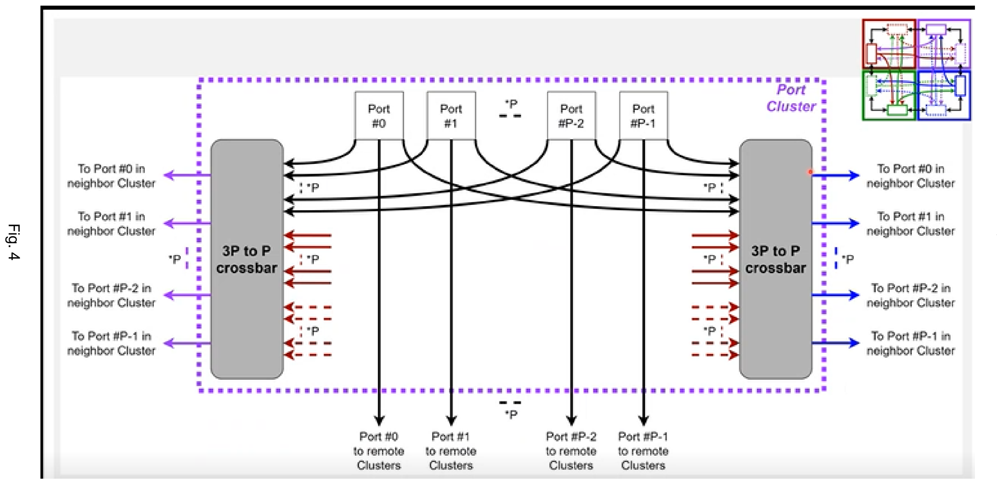

Figure 4 illustrates a port cluster internal configuration within the NoC architecture, focusing on the communication mechanisms between neighbouring clusters, specifically first cluster 120a for communicating with second cluster 120b and second cluster 120d.

Optionally, first cluster 120a comprises two 3P to P crossbars, each responsible for facilitating communication with neighbouring clusters. Additionally, first cluster 120a comprises four ports, e.g. I/Os, with ports labelled Port #0, Port #1, Port #P-2, and Port #P-1 representing virtual or physical channels associated with the port, which serve to logically subdivide the physical port for improved performance and traffic management within the NoC. This design improves the utilisation, throughput, and fairness of the NoC while minimising contention.

Virtual channels are designed to address resource contention by decoupling packet flows at the router level, preventing deadlocks, and allowing independent progress of traffic streams. Optionally, each label corresponds to a specific virtual channel that handles traffic with distinct priorities or characteristics, such as low-latency, high-throughput, or critical data. This allows the NoC to implement Quality of Service (QoS) mechanisms, where different traffic types are handled in a differentiated manner, improving overall system performance. Alternatively, these labels signify time-division multiplexing (TDM), where the physical port is shared across multiple logical flows, each assigned a specific time slot or schedule, enabling fair access and reducing congestion. In another example, the labels correspond to physical partitioning, where the bandwidth of the port is divided into lanes or flit buffers to support parallelism or simultaneous transfers from different sources. From a router design perspective, these labels can reflect internal buffering or processing stages that manage packet storage and forwarding. By employing these techniques, NoCs can enhance throughput, manage congestion efficiently, ensure resource fairness, and adapt dynamically to varying traffic patterns, all while maintaining compact and scalable hardware implementations.

The 3P to P crossbars are beneficial components in the NoC architecture, designed to manage and route data between clusters efficiently. Each crossbar connects three input ports to a single output port, enabling the consolidation and direction of data traffic. A 3P to P serves as a switching mechanism that routes data between three input ports (3P) and one output port (P). This type of crossbar enables selective connectivity and efficient data transfer, ensuring that multiple input sources can forward their packets to the single output destination without conflict or congestion. At any given time, the control logic selects one input port to be connected to the output port, while blocking the other two inputs to avoid collisions. When multiple inputs simultaneously request access to the output, an arbitration mechanism determines which input gets priority. The arbitration decision is typically made based on request signals from the input ports and any additional information like packet priority or buffer status. Optionally, to ensure reliable data transfer, the crossbar employs flow control mechanisms, such as credit-based or handshake-based schemes, which synchronise data movement with the availability of buffer space in the receiving node or core. If the output port or downstream buffers are full, the crossbar stalls the selected input and prevents data loss. Further optionally, the data path within the crossbar ensures that the data packets are forwarded without corruption or delay. This includes buffering incoming packets, latching outputs, and maintaining signal integrity during transmission. To minimise latency, the crossbar often implements pipelined data paths or uses high-speed clocking for swift switching. Each packet usually contains control information (e.g., destination address, priority). The crossbar decodes this information to guide the routing and arbitration processes. If the crossbar is part of a router in a packet-switched NoC, it interacts with routing logic that determines the output path based on the packet header.

Inputs to the two 3P to P crossbars comprise an input associated with communication output from neighbouring, and optionally remote, and two inputs associated with communication from each remote cluster configured to transmit data to the cluster. The presence of two 3P to P crossbars in the port cluster ensures that data can be routed to and from clusters with minimal latency and high efficiency. A 3P to P crossbar for each neighbouring cluster improves this further and adds additional efficiency and improved NoC cluster configuration optimisation, e.g. minimising the length of wires required to reach neighbouring clusters and increasing organisation and utility. Additionally, a dual-crossbar setup optionally provides redundancy and enhances fault tolerance, as data can be rerouted through an alternative path if one crossbar fails.

The ports (with channels Port #0, Port #1, Port #P-2, and Port #P-1) serve as the primary interfaces for data transmission between first cluster 120a and other clusters within the NoC, e.g. as an input port and/or output link. Each port is connected to both the 3P to P crossbars for communicating with the neighbouring clusters, facilitating seamless communication. The labels Port #0, Port #1, Port #P-2, and Port #P-1 indicate position and function within the cluster, although alternative configuration is also suitable.

A first port comprises a first output link from a 3P to P crossbar to a first neighbouring cluster. A second port comprises a second output link from a 3P to P crossbar to a second neighbouring cluster. A third port comprises a third output link for communication with remote clusters, where the third output link branches into a first branched output link and a second branched output link for communication with two remote clusters. For example, output from first cluster 120a is transmitted via the first output link to second cluster 130a, transmitted via the second output link to second cluster 130d, and transmitted to second cluster 130b and first cluster 120d via the third output link, such that the same data is transmitted to both remote clusters.

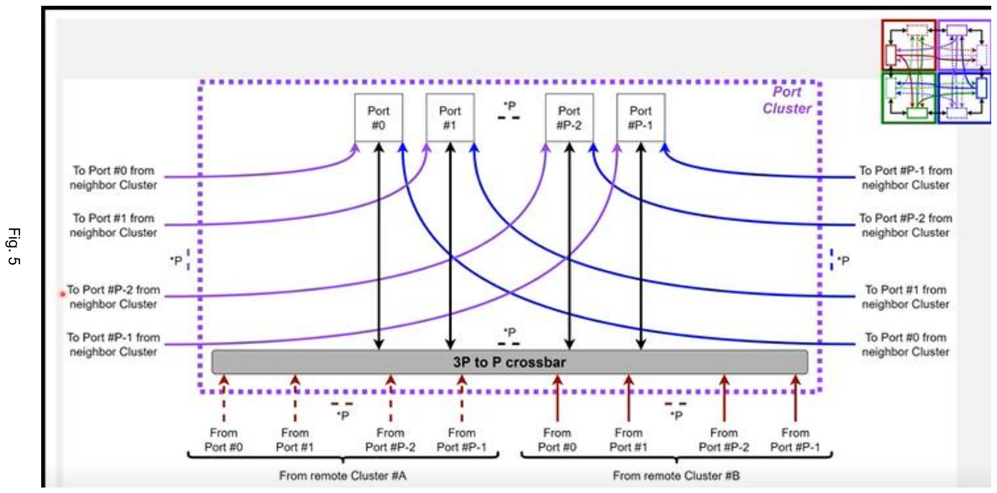

Figure 5 is a schematic diagram illustrating the port cluster configuration and interconnections within a network on chip, showing the 3P to P crossbar and connections to remote clusters. Specifically, Figure 5 illustrates an example configuration of first cluster 120a, with input from neighbouring and remote clusters via ports. Preferably, Figure 4 and Figure 5 are combined.

Input is received at the first cluster 120a from: the first port, e.g. a first input port receiving data from the fist neighbouring cluster; the second port, e.g. a second input port receiving data from the second neighbouring cluster; and the third port, e.g. a third input port, associated with receiving data from remote clusters. The communication from remote clusters is received via a fourth port, e.g. a fourth input port, that has been processed at a 3P to P crossbar. The first and second input to the 3P to P cluster is from the remote clusters. The third input at the 3P to P crossbar is from the third port. Routing the remote node communications through a 3P-to-P crossbar rather than directly through the third port could have several benefits. This configuration prioritises critical, low-latency communication (typically from neighbours) while still efficiently handling remote traffic in a flexible, scalable manner. The interplay between the third port and the 3P-to-P crossbar ensures optimal use of resources and prevents bottlenecks.

By using a crossbar to process remote communication, the system can arbitrate between multiple inputs (two remote sources and the third port itself). This ensures that the neighbouring node communication, received directly at the third port, can be given priority over remote communication, if desired. Neighbour communication often requires lower latency because it tends to involve closer, higher-bandwidth nodes that are critical for performance-sensitive operations. If remote nodes were allowed to communicate directly with the third port, there would be no intermediate arbitration. This could lead to potential congestion or resource blocking at the third port, especially when remote traffic is heavy. The 3P-to-P crossbar enables the system to better manage the flow of remote traffic by selectively forwarding data only when the third port and its associated output buffers are available. The use of a 3P-to-P crossbar abstracts and modularises the input aggregation for remote communications. This allows the design to scale efficiently as more remote nodes or ports are added, without reconfiguring the third port's direct connections. It also localises the complexity of remote arbitration within the crossbar, simplifying the third port's control logic. Additionally, the crossbar allows for dynamic reconfiguration. For example, it could implement priority switching, where neighbouring nodes are given higher priority during congestion, or load balancing across remote inputs, if supported. This would not be possible if the third port received all remote communication directly.

Moreover, the third port output to the crossbar allows for a unified pipeline that integrates neighbour node traffic with remote node traffic. Instead of treating neighbour and remote communications as independent streams, this feedback loop allows the third port to act as a central hub for managing both types of communication. By looping the third port output into the crossbar, the system effectively merges the neighbour node communication with the remote node communication at the crossbar's input stage. This allows the crossbar to arbitrate and prioritise between neighbour communication (already received at the third port) and remote communication (arriving from the other crossbar inputs). The output from the crossbar ensures that the highest-priority or most critical data stream is selected and forwarded from the third port. For example, the third port has limited buffer capacity. By forwarding its output to the crossbar and receiving back the arbitrated result, the system can use the crossbar's logic to buffer or throttle incoming remote and neighbour communication, avoiding overloading the third port. This setup provides fine-grained flow control between the inputs and outputs. Routing neighbour and remote communications through the crossbar standardises the data-handling process. Even if the neighbour communication is received directly at the third port initially, passing it through the crossbar ensures consistent handling of data streams and applies any routing, buffering, or QoS policies uniformly.

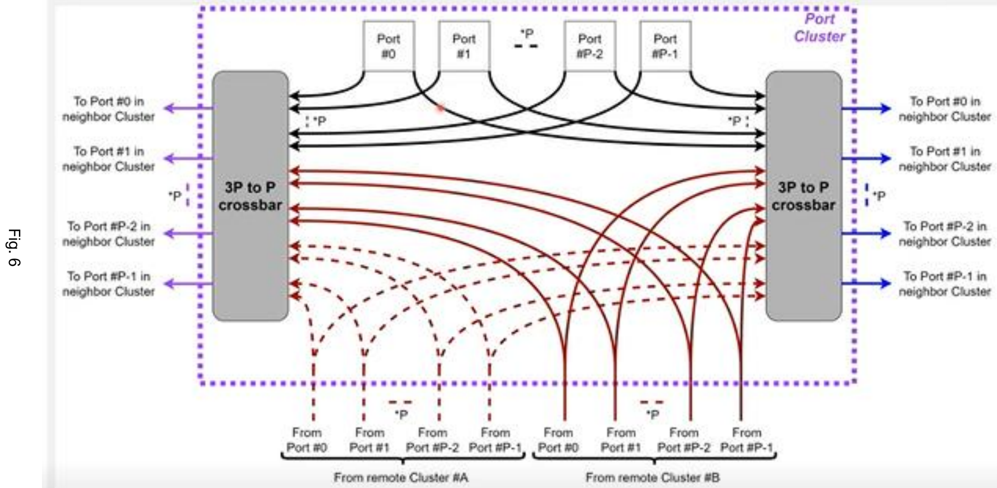

Fig. 6 illustrates a network on chip cluster configuration comprising interconnected clusters with 3P to P crossbars facilitating communication between ports of neighbouring and remote clusters. Specifically, Fig. 6 is a routing configuration for first cluster 120a, illustrating outputs to neighbouring clusters second cluster 130a and second cluster 130d. Figure 6 is preferably in combination with configurations of Figure 4 and/or Figure 5. For example, input for first cluster 120a is routed as shown in Figure 5, while input for second cluster 130a, or second cluster 130d, is routed as shown in Figure 6. This configuration reduces latency and increases efficiency. Additionally, or alternatively, connections to and/or from neighbouring clusters are terminal to prevent ring-like inefficiencies and bottlenecks, further improving the performance of the NoC 100.

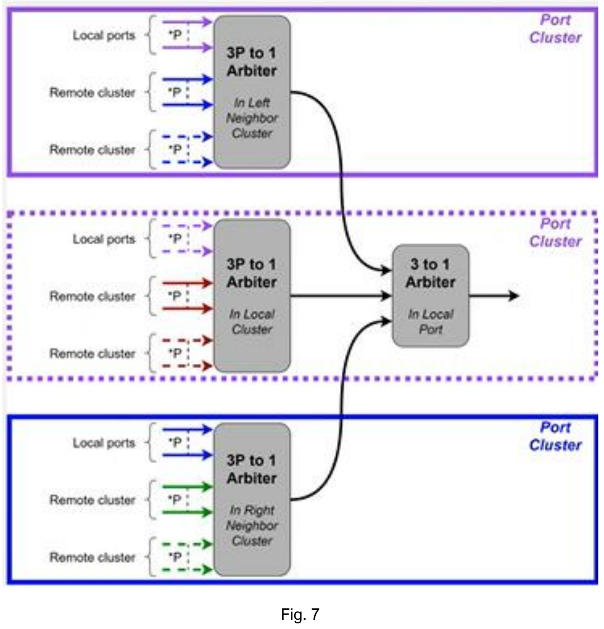

Fig. 7 is a schematic diagram illustrating the arbitration mechanism for local and remote cluster communication within a network on chip. Specifically, Fig. 7 illustrates an optional arbitration mechanism for local and remote communication within NoC 100. Further specifically, but not exclusively, Fig. 7 illustrates a preferable arbitration mechanism for first cluster 120a, where the left neighbour cluster is second cluster 130a and the right neighbour cluster is second cluster 130d. The remote clusters transmitting data to the first cluster 120a are the first cluster 120b and the second cluster 130b. The remote clusters transmitting data to the second cluster 130a are the first cluster 120d and the second cluster 130d. The remote clusters transmitting data to the second cluster 130d are the first cluster 120c and the second cluster 130c.

As shown in Fig. 5, inputs to the first cluster 120a comprise remote cluster inputs, which are routed through a 3P-to-1 arbiter, along with an input from the local ports of first cluster 120a. Similarly, local and remote inputs are routed through 3P-to-1 arbiters within the neighbouring clusters. The output from the 3P-to-1 arbiter for the first cluster 120a, as well as the outputs from the neighbouring clusters' 3P-to-1 arbiters, are then routed to a further 3-to-1 arbiter in first cluster 120a. This hierarchical arbitration mechanism ensures coordinated and efficient routing of data, prioritising traffic based on defined policies and avoiding contention at output stages.

The configuration in Figure 7 illustrates a hierarchical arbitration mechanism designed to optimise communication between local and remote clusters within NoC 100. Each cluster manages incoming data streams through multiple 3P-to-1 arbiters that resolve contention between three primary inputs: remote cluster traffic, direct neighbour (local) cluster traffic, and aggregated outputs from neighbouring clusters. The outputs from these arbiters are further routed to a higher-level arbiter within the cluster, ensuring prioritised and coordinated routing of data to the final destination. This multi-tiered arbitration structure allows the NoC to handle traffic with distinct priorities or characteristics, such as latency-sensitive or high-throughput demands, ensuring efficient resource allocation and traffic flow.

The effect of this configuration is a marked improvement in throughput, fairness, and congestion management across the NoC. By prioritising local traffic, which is typically latency-critical, the system reduces delays for close-proximity communication while still accommodating remote traffic efficiently. The hierarchical design enhances scalability, enabling the network to manage increased complexity as more clusters are added, without a significant increase in control overhead. Additionally, the use of arbitration ensures robust flow control, preventing resource blocking and packet loss even under heavy traffic conditions. This approach supports dynamic reconfiguration and Quality of Service (QoS) policies, making the system adaptable to varying workloads while maintaining high performance and reliability.

The above described configurations in relation to first cluster 120a are optionally applicable to any cluster of NoC 100, either alone or in combination.

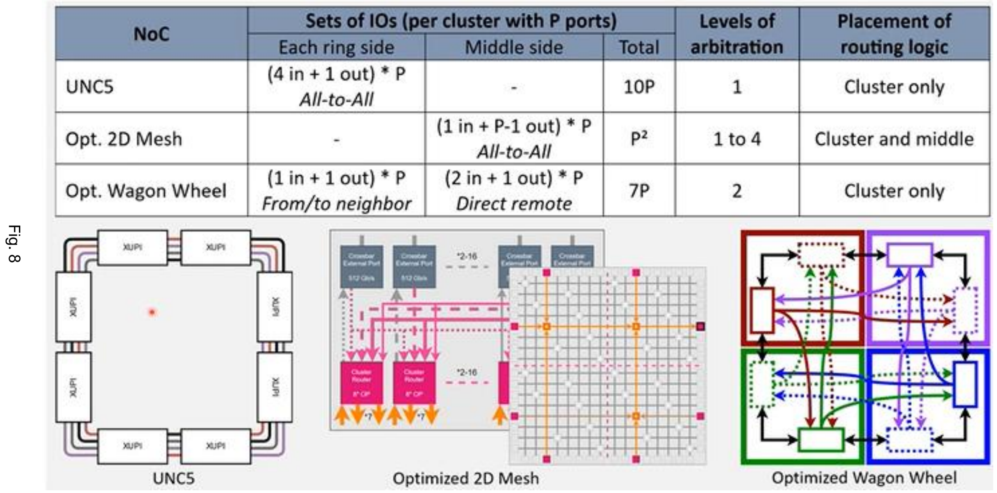

Fig. 8 is a comparative diagram illustrating different network on chip architectures, including UNC5, Optimized 2D Mesh, and Optimized Wagon Wheel, e.g. NoC 100, with their respective sets of IOs, levels of arbitration, and placement of routing logic. Each architecture is evaluated based on the sets of I/Os per cluster, levels of arbitration, and placement of routing logic.

The UNC5 architecture employs a torus topology, where each cluster is connected to its neighbouring cluster in a ring-like pattern. This design results in a high number of I/Os (10P) and a single level of arbitration, with routing logic placed only at the cluster level. While this configuration simplifies the routing logic, it introduces significant latency due to multiple hops between clusters and potential congestion at the cluster level.

The Optimized 2D Mesh architecture, on the other hand, uses a mesh topology to interconnect multiple clusters. This design reduces the total number of I/Os to 8P and introduces up to four levels of arbitration, with routing logic distributed between the cluster and middle levels. The mesh topology allows for more direct connections between clusters, reducing the number of hops required for data to travel across the network. However, the increased complexity of the routing logic and the need for multiple levels of arbitration can lead to higher power consumption and design complexity. The Optimized 2D Mesh offers a balance between connectivity and complexity, but it still faces challenges in terms of scalability and efficient data routing.

The Optimized Wagon Wheel architecture, e.g. NoC 100, represents improvements over both the UNC5 and Optimized 2D Mesh designs. This architecture features a unique configuration where each cluster is directly connected to four other clusters, ensuring efficient and low-latency communication. The total number of I/Os is reduced to 7P, with two levels of arbitration and routing logic placed only at the cluster level. This design minimizes the complexity of the routing logic while maintaining high connectivity and fault tolerance. The direct connections between clusters in the Optimized Wagon Wheel architecture facilitate faster data transfer rates and reduced latency, making it highly suitable for applications requiring high performance and reliability.

One of the key advantages of the Optimized Wagon Wheel architecture is its ability to balance the trade-offs between wiring complexity, latency, and scalability. By combining elements of the torus and mesh topologies, this design achieves an optimal configuration that reduces the number of inter-cluster hops and the amount of wiring required. The symmetrical and uniform connectivity pattern ensures balanced load distribution and efficient use of network resources, preventing congestion and bottlenecks. Additionally, the modular nature of the design allows for easy scalability, enabling the network to grow seamlessly to meet increasing computational demands. Overall, the Optimized Wagon Wheel architecture offers significant improvements in performance, reliability, and efficiency, making it a robust and efficient solution for modern multi-core and many-core systems.

## Claims

1. A network on chip (100) comprising:
a first quadrant (110a), a second quadrant (110b), a third quadrant (110c), and a fourth quadrant (110d);
wherein each quadrant (110a, 110b, 110c, 110d) comprises a first cluster (120a, 120b, 120c, 120d) and a second cluster (130a, 130b, 130c, 130d); and
wherein the first cluster (120a) of the first quadrant (110a) is directedly connected to four clusters comprising:
the second cluster (130a) of the first quadrant (110a), the second cluster (120b) of the second quadrant (110b), the first cluster (120d) of the fourth quadrant (110d), and the second cluster (130d) of the fourth quadrant (110d).

2. The network on chip according to claim 1, wherein the first cluster (120a) of the first quadrant (110a) is indirectly connected to three clusters via one of the four clusters.

3. The network on chip according to claim 1 or claim 2, wherein the first cluster (120a) of the first quadrant (110a) is connected to any cluster by a maximum of one intermediate hop.

4. The network on chip according to any preceding claim, wherein the second cluster (130a) of the first quadrant (110a) is directly connected to four clusters comprising:
the first cluster (120a) of the first quadrant (110a), the first cluster (120b) of the second quadrant (110b), the second cluster (130b) of the second quadrant (110b), and the first cluster (120d) of the fourth quadrant (110d).

5. The network on chip according to any preceding claim, wherein, for each quadrant (110a, 110b, 110c, 110d), the first cluster (120a, 120b, 120c, 120d) of the quadrant (110a, 110b, 110c, 110d) is directly connected to:
the second cluster (130a, 130b, 130c, 130d) of the quadrant (110a, 110b, 110c, 110d),
the first cluster (120d, 120a, 120b, 120c) and the second cluster (130d, 130a, 130b, 130c) of an adjacent quadrant in the first circumferential direction (110d, 110a, 110b, 110c), and
the second cluster (130b, 130c, 130d, 130a) in an adjacent quadrant in the second circumferential direction (110b, 110c, 110d, 110a).

6. The network on chip according to any preceding claim, wherein, for each quadrant (110a, 110b, 110c, 110d), the second cluster (130a, 130b, 130c, 130d) of the quadrant (110a, 110b, 110c, 110d) is directly connected to:
the first cluster (120a, 120b, 120c, 120d) of the quadrant (110a, 110b, 110c, 110d),
the first cluster (120d, 120a, 120b, 120c) of the adjacent quadrant in the first circumferential direction (110d, 110a, 110b, 110c), and
the first cluster (120b, 120c, 120d, 120a) and the second cluster (130b, 130c, 130d, 130a) in the adjacent quadrant in the second circumferential direction (110b, 110c, 110d, 110a).

7. The network on chip according to claim 5 or claim 6, wherein, for each quadrant (110a, 110b, 110c, 110d), the first cluster (120a, 120b, 120c, 120d) of the quadrant (110a, 110b, 110c, 110d) is indirectly connected to three clusters comprising:
the first cluster (120c, 120d, 120a, 120c) of a further quadrant in the second circumferential direction (110c, 110d, 110a, 110b) via the second cluster (130b, 130c, 130d, 130a) in the adjacent quadrant in the second circumferential direction (110b, 110c, 110d, 110a);
the second cluster (130c, 130d, 130a, 130b) of a further quadrant in the first circumferential direction (110c, 110d, 110a, 110b) via the first cluster (120d, 120a, 120b, 120c) of the adjacent quadrant in the first circumferential direction (110d, 110a, 110b, 110c); and
the first cluster (120b, 120c, 120d, 120a) in an adjacent quadrant in the second circumferential direction (110b, 110c, 110d, 110a).

8. The network on chip of any of claims 5 to 7, wherein:
the first circumferential direction is clockwise and the second circumferential direction is anticlockwise; or
the first circumferential direction is anticlockwise and the second circumferential direction is clockwise.

9. The network on chip according to any preceding claim, wherein any cluster of the first clusters (120a, 120b, 120c, 120d) and the second clusters (130a, 130b, 130c, 130d) comprises:
a first output link and a first input port,
a second output link and a second input port,
a third output link and a third input port, wherein the third output link is branched into a first branched output link and a second branched output link, and
a fourth input port.

10. The network on chip according to claim 9, wherein the first branched output link and the second branched output link are configured to transmit identical data to a remote cluster.

11. The network on chip according to claim 9 or claim 10, wherein any of the first input port, the second input port, the third input port or the fourth input port is provided with an input port filter for filtering out data addressed to other clusters.

12. The network on chip of any of claims 9 to 11, wherein:
the first output link and the first input port is associated with communication between the cluster and a first ring adjacent cluster;
the second output link and the second input port is associated with communication between the cluster and a second ring adjacent cluster; and
the third output link, the third input port and the fourth input port is associated with communication between the cluster and a remote cluster.

13. The network on chip of claim 12, wherein:
the first output link and the first input port is at a first ring side of the cluster;
the second output link and the second input port is at a second ring side of the cluster; and
the third output link, the third input port and the fourth input port is at a core facing side of the cluster.

14. The network on chip of any preceding claim, wherein connection between any of the first clusters (120a, 120b, 120c, 120d) and any of the second clusters (130a, 130b, 130c, 130d) is configured using wires.

15. An integrated circuit comprising:
a network on chip of any of claims 1 to 14; and
a memory unit connected to the network on chip, the memory unit comprising static random-access memory (SRAM) configured to provide access latency and bandwidth to any cluster of the first clusters (120a, 120b, 120c, 120d) and/or the second clusters (130a, 130b, 130c, 130d).
